Europäisches Patentamt

European Patent Office

Office européen des brevets

(11) Numéro de publication: **0 081 213**
**A1**

## (12) DEMANDE DE BREVET EUROPEEN

(21) Numéro de dépôt: **82111208.3**

(22) Date de dépôt: **03.12.82**

(51) Int. Cl.³: **C 01 C 1/18**
**C 02 F 1/58**

(30) Priorité: **04.12.81 FR 8122776**

(43) Date de publication de la demande:
**15.06.83 Bulletin 83/24**

(84) Etats contractants désignés:
**AT BE CH DE GB IT LI LU NL SE**

(71) Demandeur: **APPAREILS ET EVAPORATEURS KESTNER**
**7, rue de Toul**
**F-59003 Lille(FR)**

(72) Inventeur: **Leleu, René**
**7, rue de Toul**
**F-59003 Lille(FR)**

(74) Mandataire: **Casalonga, Axel et al,**
**BUREAU D.A. CASALONGA OFFICE JOSSE & PETIT**
**Baaderstrasse 12-14**
**D-8000 München 5(DE)**

(54) **Procédé de dépollution des effluents de la fabrication du nitrate d'ammonium et de récupération des éléments contenus dans lesdits effluents.**

(57) L'invention concerne un procédé de dépollution des effluents de la fabrication de nitrate d'ammonium et de récupération des éléments contenus dans ces effluents comprenant sucessivement les trois opérations suivantes : la séparation de l'ammoniac libre dans une colonne (2) d'entraînement par la vapeur d'eau, la fixation du nitrate d'ammonium dissous sur des résines échangeuses d'ions (3) et la régénération de celles-ci par des solutions nitriques et ammoniacales et la concentration par évaporation des solutions de régénération dans un évaporateur classique (4).

L'ammoniac libre récupéré est fixé par l'acide nitrique en (6) et recyclé en fabrication. Les eaux traitées par les résines échangeuses d'ions ne contenant qu'une très faible quantité d'ions ammonium peuvent être rejetées dans l'environnement.

FIG.1

Procédé de dépollution des effluents de la fabrication du nitrate d'ammonium et de récupération des éléments contenus dans lesdits effluents.

La présente invention concerne un procédé de dépollution des effluents de la fabrication du nitrate d'ammonium et de récupération de l'ammoniac et du nitrate d'ammonium contenus dans ces effluents.

Le procédé de fabrication du nitrate d'ammonium utilise la réaction de neutralisation directe de l'acide nitrique par l'ammoniac. La solution de nitrate ainsi obtenue est ensuite concentrée par évaporation. Toute installation de fabrication de nitrate d'ammonium produit donc des eaux condensées provenant de la neutralisation de l'acide nitrique par l'ammoniac et de la concentration du nitrate fabriqué.

Ces condensats représentent 500 à 550 kg par tonne de nitrate fabriqué. Ils contiennent 4 à 8 g/litre d'ammoniac libre et 4 à 6 g/litre de nitrate d'ammonium dissous.

Les procédés imaginés jusqu'à ce jour pour séparer l'ammoniac et le nitrate des condensats n'ont pas été développés, soit à cause de l'importance du matériel à mettre en oeuvre, soit à cause de la consommation d'énergie qu'ils impliquent, ou bien à cause des deux phénomènes réunis.

La perte en azote des unités de fabrication de nitrate d'ammonium est en effet inférieure ou égale à 1% de la production. Elle atteint par exemple 0,5% dans les unités les plus modernes. Par conséquent, étant donné la valeur marchande relativement faible du produit, cette perte serait tout à fait tolérable si elle ne constituait pas une pollution gênante pour le milieu naturel dans lequel elle se trouve rejetée.

Pour que la dépollution des condensats soit réalisée, il importe que le coût de la récupération des éléments polluants soit le plus faible possible, et de préférence inférieur au coût de fabrication normal de ces éléments.

La présente invention a donc pour objet un procédé pour la dépollution des effluents de la fabrication du nitrate d'ammonium et la récupération des éléments contenus dans ces effluents, à savoir l'ammoniac gazeux et le nitrate d'ammonium en solution, successivement trois opérations qui peuvent être mises en oeuvre séparément ou en combinaison pour constituer l'unité la plus économique dans le contexte de l'usine où ce procédé doit être implanté, en fonction notamment des disponibilités en énergie et de l'utilisation possible des produits récupérés. Ces trois opérations sont, dans l'ordre de leur exécution :

- la séparation de l'ammoniac libre;

- la fixation du nitrate d'ammonium dissous dans les solutions dégazées sur des résines échangeuses d'ions, avec régénération de ces dernières par une solution d'ammoniac ou d'acide nitrique, restituant une solution concentrée en nitrate d'ammonium;

- la concentration par évaporation des solutions de régénération des résines jusqu'à une teneur en nitrate permettant son recyclage en fabrication.

La séparation de l'ammoniac libre peut être envisagée de plusieurs manières : ébullition des solutions ou entraînement par un gaz.

La solution la plus simple à mettre en oeuvre, et qui est préconisée pour la mise en oeuvre du procédé selon l'invention, est un entraînement par la vapeur d'eau circulant dans une colonne à garnissage ou à pulvérisation à contre-courant de l'effluent qui aura été précédemment réchauffé. La quantité de vapeur utilisée est réglée de manière que cette dernière contienne à la sortie de la colonne 10 à 20% d'ammoniac.

Selon une première variante du procédé de l'invention, la vapeur chargée d'ammoniac issue de la colonne d'entraînement peut être utilisée pour le réchauffage par mélange de la solution d'acide nitrique entrant dans la fabrication du nitrate d'ammonium, l'ammoniac libre étant ainsi fixé par l'acide nitrique et recyclé en fabrication.

Selon une seconde variante du procédé de l'invention, la vapeur émise par la colonne d'entraînement de l'ammoniac peut aussi être utilisée pour le chauffage de l'évaporateur des solutions de nitrate d'ammonium. Cette vapeur chargée d'ammoniac est alors partiellement condensée, ce qui permet la récupération partielle de la chaleur de vaporisation de l'eau et l'enrichissement en ammoniac des vapeurs qui seront absorbées par la solution d'acide nitrique entrant dans la fabrication du nitrate d'ammonium.

Dans cette seconde variante, les condensats de la vapeur chargée en ammoniac sont eux-mêmes chargés en ammoniac et doivent être envoyés en tête de la colonne d'entraînement pour être dégazés.

Cette première opération de séparation de l'ammoniac libre permet d'obtenir une solution contenant uniquement du nitrate d'ammonium dissous dans l'eau. Cette solution est traitée par des résines échageuses d'ions, des échangeurs de cations permettant de fixer l'ion $NH_4^+$ et des échangeurs d'anions permettant de fixer l'ion $NO_3^-$. La disposition des résines dans des récipients métalliques ou revêtus, placés en série ou en parallèle sur le circuit d'effluent, peut être une disposition usuelle dans la technique.

L'effluent ainsi traité ne contient que 50 à 100 mg/litre $NH_4^+$ et peut être rejeté dans l'environnement.

Les résines chargées sont alors régénérées par une solution d'acide nitrique pour l'échangeur de cations et par une solution ammoniacale pour l'échangeur d'anions. Les quantités d'acide nitrique et d'ammoniac consommées pour la régénération des résines sont réglées de manière à assurer une autoneutralisation des solutions de régénération.

La concentration en ammoniac et acide nitrique des solutions utilisées pour la régénération est réglée de manière à produire, lors de la régénération des résines, des solutions contenant 200 à 250 g/litre de nitrate d'ammonium, c'est-à-dire des solutions 40 à 60 fois plus concentrées en nitrate d'ammonium que les solutions traitées par les résines.

Ces solutions de régénération riches en nitrate d'ammonium sont concentrées dans un évaporateur classique à la concentration nécessaire pour leur réutilisation ultérieure. Le type d'évaporateur utilisé dépend essentiellement de la concentration finale désirée pour l'utilisation de la solution récupérée de nitrate d'ammonium.

Selon un premier mode de réalisation du procédé de l'invention, les vapeurs produites par la concentration des solutions de nitrate d'ammonium dans l'évaporateur sont condensées séparément dans un condenseur refroidi par l'eau.

Selon un second mode de réalisation du procédé de l'invention, les vapeurs produites par la concentration des solutions de nitrate d'ammonium dans l'évaporateur peuvent être renvoyées à travers la colonne d'entraînement d'ammoniac. Dans ce cas, ces vapeurs d'évaporation peuvent être comprimées à l'aide d'un compresseur placé en amont ou en aval de la colonne d'entraînement d'ammoniac pour pouvoir être réutilisées pour le chauffage de l'évaporateur.

Les divers modes de réalisation du procédé selon l'invention dont les trois opérations fondamentales peuvent être exécutées séparément ou en combinaison selon les cas qui sont particuliers à chaque unité de fabrication de nitrate d'ammonium, seront mieux illustrés à l'aide du dessin annexé, sur lequel :

la fig. 1 représente une première variante du procédé de l'invention dans laquelle les trois opérations sont exécutées séparément;

la fig. 2 représente une seconde variante du procédé de l'invention dans laquelle la vapeur chargée en ammoniac émise par la colonne d'entraînement est utilisée pour le chauffage de l'évaporateur;

la fig. 3 représente une troisième variante du procédé de l'invention dans laquelle les vapeurs d'évaporation de la solution de nitrate d'ammonium sont renvoyées à travers la colonne d'entraînement d'ammoniac;

la fig. 4 représente une quatrième variante du procédé de l'invention selon laquelle les vapeurs d'évaporation de la solution de nitrate d'ammonium sont recomprimées et refoulées à travers la colonne d'entraînement d'ammoniac pour pouvoir être utilisées pour le chauffage de l'évaporateur;

la fig. 5 représente une cinquième variante du procédé de l'invention selon laquelle la vapeur chargée en ammoniac issue de la colonne d'entraînement d'ammoniac est comprimée avant d'être utilisée pour le chauffage de l'évaporateur, la vapeur issue de ce dernier étant renvoyée à travers la colonne d'entraînement.

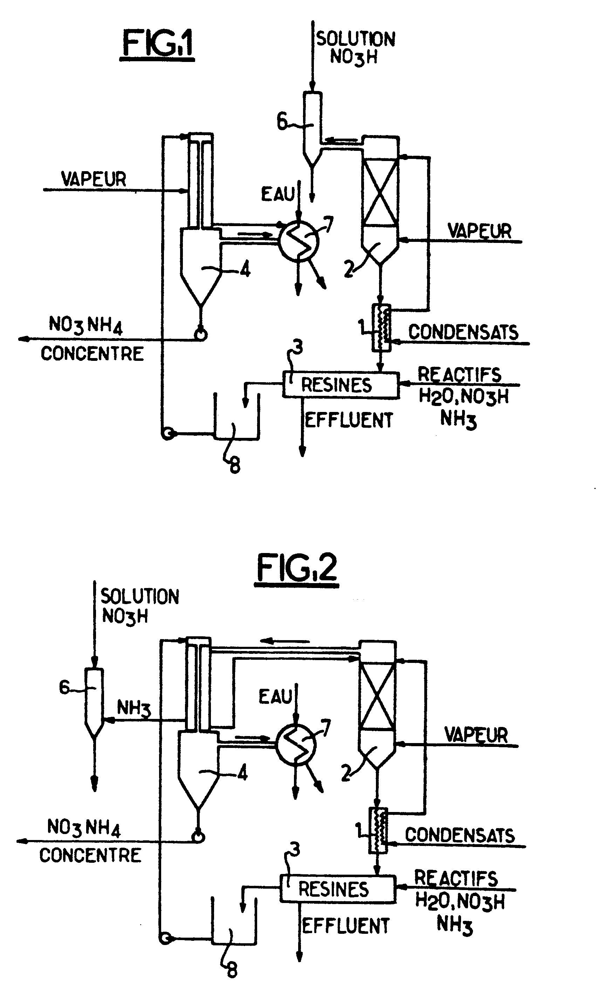

Sur la fig. 1 du dessin annexé représentant un mode de réalisation du procédé de l'invention selon lequel les trois opérations fondamentales sont exécutées séparément, les condensats provenant de la fabrication du nitrate d'ammonium, préalablement réchauffés dans un échangeur de chaleur 1 sont envoyés en tête d'une colonne 2 d'entraînement de l'ammoniac par la vapeur d'eau circulant à contre-courant des condensats. La vapeur chargée en ammoniac obtenue à la sortie de la colonne d'entraînement 2 est directement condensée dans un absorbeur d'ammoniac 6, dans la solution d'acide nitrique entrant dans la fabrication du nitrate d'ammonium. La solution dégazée contenant uniquement du nitrate d'ammonium dissous dans l'eau passe à nouveau dans l'échangeur de chaleur 1 puis est traitée par des résines échangeuses d'ions 3. Les eaux ainsi traitées ou effluents peuvent être rejetés dans l'environnement. Les résines chargées sont régénérées par une solution d'acide nitrique et par une solution ammoniacale et les solutions de régénération sont introduites dans un bac relais 8 avant d'être concentrées dans un évaporateur classique 4 à la concentration nécessaire pour leur réutilisation ultérieure. L'évaporateur 4 est chauffé par de la vapeur et les vapeurs produites par la concentration des solutions de nitrate d'ammonium sont condensées séparément dans un condenseur 7 refroidi par l'eau.

Sur la fig. 2, les vapeurs chargées en ammoniac issues de la colonne d'entraînement 2 sont utilisées pour le chauffage de l'évaporateur de solutions de nitrate d'ammonium 4. On obtient ainsi un enrichissement en ammoniac des vapeurs qui sont absorbées par l'acide nitrique entrant dans la fabrication du nitrate d'ammonium.

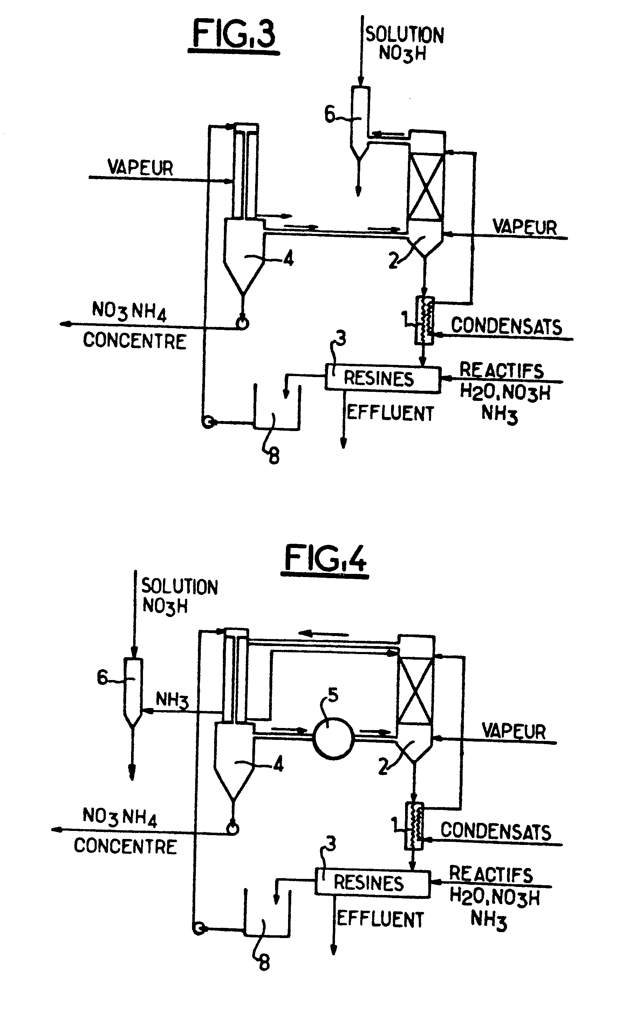

Sur la fig. 3, l'évaporateur 4 est chauffé par de la vapeur pure, mais les vapeurs d'évaporation de la solution de nitrate, au lieu d'être condensées séparément, sont envoyées à travers la colonne d'entraînement d'ammoniac 2.

Sur la fig. 4, on utilise un compresseur mécanique de vapeur 5 qui recomprime la vapeur d'évaporation de la solution de nitrate provenant de l'évaporateur 4 pour la refouler à travers la colonne d'entraînement d'ammoniac 2, à une pression telle que la vapeur sortant de cette colonne peut être utilisée pour le chauffage de l'évaporateur 4.

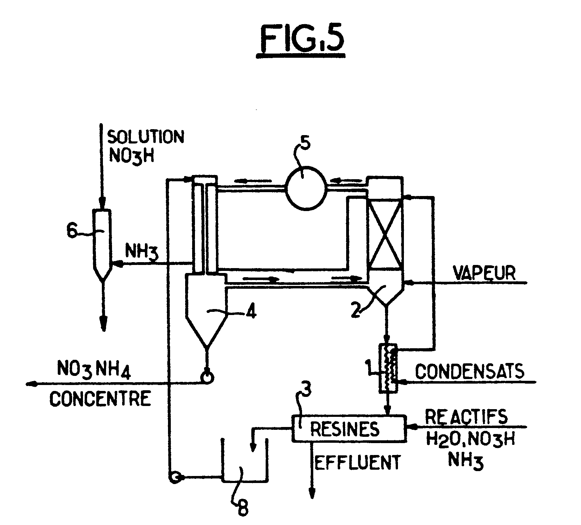

Sur la fig. 5, on place le compresseur 5 sur les vapeurs issues de la colonne d'entraînement d'ammoniac 2 pour les comprimer dans l'évaporateur 4, la vapeur issue de ce dernier étant dirigée vers le pied de la colonne d'entraînement 2.

Dans le cas des deux variantes du procédé de l'invention représentées sur les fig. 4 et 5, l'énergie utilisée est essentiellement de l'énergie électrique, alors que dans les autres modes de réalisation, l'énergie utilisée est essentiellement une énergie thermique sous forme de vapeur d'eau.

Le choix entre les différentes variantes du procédé de l'invention décrites ci-dessus à titre non limitatif pourra se faire en fonction des conditions particulières à chaque unité de fabrication de nitrate d'ammonium : forme d'énergie disponible, concentration en ammoniac des vapeurs absorbées par l'acide nitrique, concentration finale des solutions de nitrate d'ammonium.

## REVENDICATIONS

1. Procédé de dépollution des effluents de la fabrication de nitrate d'ammonium et de récupération des éléments contenus dans lesdits effluents, caractérisé par le fait qu'il comprend successivement les trois opérations suivantes, exécutées séparément ou en combinaison :

    - la séparation de l'ammoniac libre,

    - la fixation du nitrate d'ammonium dissous sur des résines échangeuses d'ions et la régénération de celles-ci par des solutions nitriques ou ammoniacales,

    - la concentration par évaporation des solutions de régénération des résines.

2. Procédé selon la revendication 1, caractérisé par le fait que la séparation de l'ammoniac libre est réalisée dans une colonne (2) d'entraînement par la vapeur d'eau circulant à contre-courant de l'effluent.

3. Procédé selon la revendication 2, caractérisé par le fait que la vapeur chargée d'ammoniac émise par la colonne d'entraînement est utilisée pour le réchauffage de la solution d'acide nitrique (6) entrant dans la fabrication du nitrate d'ammonium, l'ammoniac libre étant ainsi fixé par l'acide nitrique et recyclé en fabrication.

4. Procédé selon la revendication 2, caractérisé par le fait que la vapeur chargée d'ammoniac émise par la colonne d'entraînement (2) est utilisée pour le chauffage de l'évaporateur (4) de solutions de nitrate d'ammonium, les condensats étant envoyés en tête de la colonne d'entraînement pour être dégazés et la vapeur enrichie en ammoniac étant absorbée par la solution d'acide nitrique (6) entrant dans la fabrication du nitrate d'ammonium.

5. Procédé selon l'une quelconque des revendications 1 à 4, caractérisé par le fait que les vapeurs d'évaporation de la solution de nitrate d'ammonium issues de l'évaporateur (4) sont condensées séparément dans un condenseur (7) refroidi par eau.

6. Procédé selon l'une quelconque des revendications 1 à 4, caractérisé par le fait que les vapeurs d'évaporation de la solution de nitrate d'ammonium issues de l'évaporateur (4) sont renvoyées à travers la colonne d'entraînement d'ammoniac (2).

7. Procédé selon les revendications 4 et 6, caractérisé par le fait que les vapeurs d'évaporation de la solution de nitrate d'ammonium issues de l'évaporateur (4) sont comprimées à l'aide d'un compresseur (5) placé en amont ou en aval de la colonne d'entraînement d'ammoniac (2) pour pouvoir être utilisées pour le chauffage de l'évaporateur (4).

8. Procédé selon l'une quelconque des revendications 1 à 7, caractérisé par le fait que la solution dégazée provenant de la colonne d'entraînement d'ammoniac (2) est traitée par des échangeurs de cations fixant l'ion $NH_4^+$ et des échangeurs d'anions fixant l'ion $NO_3^-$, l'échangeur de cations étant régénéré par une solution d'acide nitrique et l'échangeur d'anions par une solution ammoniacale.

## FIG.1

SOLUTION
NO3H

VAPEUR

6

EAU

7

VAPEUR

4

2

NO3NH4
CONCENTRE

1

CONDENSATS

3

RESINES

REACTIFS
H2O, NO3H
NH3

EFFLUENT

8

## FIG.2

SOLUTION
NO3H

6

NH3

EAU

7

VAPEUR

4

2

NO3NH4
CONCENTRE

1

CONDENSATS

3

RESINES

REACTIFS
H2O, NO3H
NH3

EFFLUENT

8

## FIG.3

SOLUTION
NO3H

6

VAPEUR

VAPEUR

4

2

NO3NH4
CONCENTRE

1

CONDENSATS

3

RESINES

REACTIFS
H2O,NO3H
NH3

EFFLUENT

8

## FIG.4

SOLUTION
NO3H

6

NH3

5

VAPEUR

4

2

NO3NH4
CONCENTRE

1

CONDENSATS

3

RESINES

REACTIFS
H2O,NO3H
NH3

EFFLUENT

8

# FIG.5

SOLUTION NO$_3$H

5

6

NH$_3$

VAPEUR

4

2

NO$_3$NH$_4$ CONCENTRE

1 CONDENSATS

3

RESINES

REACTIFS H$_2$O,NO$_3$H NH$_3$

EFFLUENT

8

**0081213**
Numéro de la demande

Office européen
des brevets

**RAPPORT DE RECHERCHE EUROPEENNE**

EP  82 11 1208

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | C 01 C   1/18 |
| Y | FR-A-2 376 826  (APPAREILS ET EVAPORATEURS KESTNER) *Page 3, revendications 1-3* | 1,3 | C 02 F   1/58 |
| | --- | | |
| Y | US-A-3 956 115  (N.M.ARION) *Colonne 9, lignes 40-50* | 1,8 | |
| | --- | | |
| Y | FR-A-2 422 600  (HOOGOVENS IJMUIDEN B.V.) *Page 6, revendication 1* | 1,2 | |
| | --- | | |
| A | US-A-4 294 812  (R.A.OLER) | | |
| | --- | | |
| A | FR-A-2 296 602  (FOSTER WHEELER ENERGY CORP.) | | DOMAINES TECHNIQUES RECHERCHES (Int. Cl. ³) |
| | --- | | |
| A | US-A-4 098 690  (SEMMENS) | | C 01 C   1/18 |
| | --- | | C 02 F   1/58 |
| A | FR-A-2 450 809  (C.F.INDUSTRIES) | | |
| | ----- | | |

Le présent rapport de recherche a été établi pour toutes les revendications

| Lieu de la recherche | Date d'achèvement de la recherche | Examinateur |
|---|---|---|
| LA HAYE | 03-03-1983 | STEELANDT B. |